**Europäisches Patentamt**

**European Patent Office**

**Office européen des brevets**

(11) Publication number : **0 370 112 B1**

(12) **EUROPEAN PATENT SPECIFICATION**

(45) Date of publication of patent specification :
25.03.92 Bulletin 92/13

(51) Int. Cl.⁵ : **B23H 7/10**

(21) Application number : **89904235.2**

(22) Date of filing : **11.04.89**

(86) International application number :
**PCT/JP89/00390**

(87) International publication number :
**WO 89/10228 02.11.89 Gazette 89/26**

(54) **WIRE RECOVERY METHOD.**

(30) Priority : **25.04.88 JP 100084/88**

(43) Date of publication of application :
**30.05.90 Bulletin 90/22**

(45) Publication of the grant of the patent :
**25.03.92 Bulletin 92/13**

(84) Designated Contracting States :
**CH DE FR GB IT LI**

(56) References cited :
**JP-A- 5 390 437**
**JP-A- 5 531 783**
**JP-B- 4 947 666**
**JP-U-57 116 316**
**No relevant documents have been disclosed**

(73) Proprietor : **FANUC LTD.**
**3580, Shibokusa Aza-Komanba, Oshino-mura**
**Minamitsuru-gun, Yamanashi 401-05 (JP)**

(72) Inventor : **ASO Toshiyuko Fanuc**
**Manshonharimomi 3539-1,**
**Shibokusa Oshino-mura**
**Minamitsuru-gun Yamanashi 401-05 (JP)**
Inventor : **HOSODA, Hiroshi Fanuc Dai-3**
**Vira-karamatsu**
**3527-1, Shibokusa Oshino-mura**
**Minamitsuru-gun Yamanashi 401-05 (JP)**

(74) Representative : **Billington, Lawrence Emlyn**
**Haseltine Lake & Co Hazlitt House 28,**
**Southampton Buildings Chancery Lane**
**London WC2A 1AT (GB)**

## Description

The present invention relates to a wire recovery method for use in a wire-cut electric discharge machine.

## Background Art

In wire-cut electric discharge machines, a used wire is usually retrieved by using a wire recovery drum.

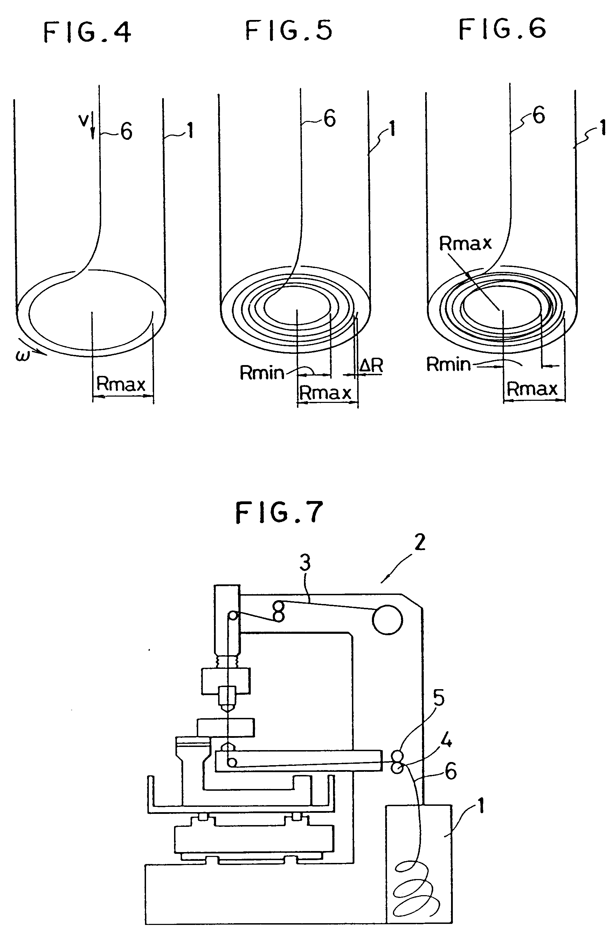

As shown in a typical example of Fig. 7, a wire recovery drum 1 is arranged at the lowest-course side of a wire path 3 of a wire-cut electric discharge machine 2, and a used wire 6 held between a feed roller 4 and a pinch roller 5 and drawn out therefrom is simply let fall into the wire recovery drum 1. The wire recovery drum 1 is easy to use and has a large capacity, and therefore, it is widely used.

However, the used wire 6 is laid randomly and bulkily within the recovery drum 1 if simply let fall into the drum 1, and therefore, the capacity of the drum 1 cannot be effectively utilized.

## Disclosure of the Invention

An object of the present invention is to provide a wire recovery method which can make full use of the capacity of a wire recovery drum

To achieve the above object, according to one aspect of the present invention, there is provided a method of recovering a used wire in a wire recovery drum while rotating the wire recovery drum, comprising the steps of (a) determining a wire coiling radial range and a wire coiling interval, (b) calculating a set of wire coiling radii which fall within the wire coiling radial range and wherein each radins differs from the adjacent one by the desired wire coiling interval, (c) calculating a respective angular velocity of the wire recovery drum at a respective one of the wire coiling radii that provides a wire coiling speed coinciding with a command wire feed speed, (d) updating the angular velocity of the wire recovery drum each time the wire recovery drum makes one rotation, and (e) controlling an actual angular velocity of the wire revovery drum to the calculated angular velocity.

Thus, according to this aspect of the present invention, a set of desired wire coiling radii are determined which fall within the desired wire coiling radial range and adjacent ones of which differ by the desired wire coiling interval, the desired angular velocity of the wire recovery drum for a respective one of the desired wire coiling radii is determined such that the wire coiling speed at the respective desired wire coiling radius coincides with the command wire feed speed, and the actual angular velocity of the drum is controlled to the desired angular velocity which is updated each time the drum makes one rotation. Accordingly, the used wire can be neatly and evenly received in the wire recovery drum, whereby the capacity of the drum can be effectively utilized and unmanned operation of the wire-cut electric discharge machine can be continued for a long time.

Another aspect of the present invention is defined by the attached claim 2.

## Brief Description of the Drawings

Fig. 1 is a schematic longitudinal sectional view of a wire recovery apparatus to which a wire recovery method according to a first embodiment of the present invention is applied;

Fig. 2 is an enlarged perspective view of an annular rail shown in Fig. 1;

Fig. 3 is a flowchart illustrating a wire recovery method according to a second embodiment of the present invention;

Fig. 4 is a diagram illustrating a state in which wire coiling of a first layer is started in accordance with the wire recovery method of the present invention;

Fig. 5 is a diagram illustrating a state in which wire coiling of the first layer is completed;

Fig. 6 is a diagram illustrating a state in which wire coiling of a second layer is started; and

Fig. 7 is a schematic view of a wire-cut electric discharge machine provided with a prior art wire recovery apparatus.

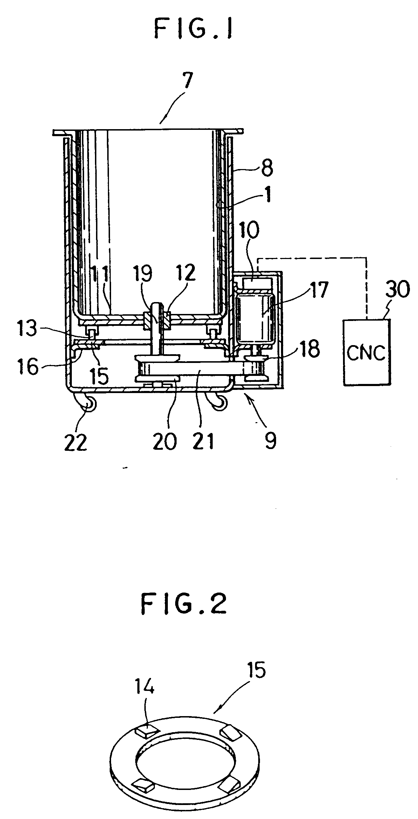

In Fig. 1, a wire recovery apparatus 7 is provided with a wire recovery drum 1 which is disposed within a cylindrical outer casing 8 having an upper open end. The drum 1 includes a cylindrical peripheral wall, and a bottom wall 11 having a reinforced shaft fitting hole 12 which is bored through the central portion thereof. A plurality of rubber rollers, e.g., four rubber rollers 13, are arranged at a peripheral portion of the bottom surface of the drum 1 coaxially with the drum at equal angular intervals, and each have a roller shaft rotatably supported.

An annular rail 15 (Fig. 2), having wedge-shaped protuberances 14 and aligned with the roller 13, is secured to the outer casing 8 through a stay 16. The wire recovery drum 1 is placed on this rail 15 through the rollers 13 for rotation relative to the outer casing 8, so that the drum 1 is shaken vertically when the rollers run over the protuberances 14 during rotation.

A rotating mechanism 9, including a motor 17, for rotating the wire recovery drum 1 is so arranged that a driving pulley 18, secured to the output shaft of the motor 17, is operatively coupled through a belt 21 to a driven pulley 20 which is secured to a drive shaft 19 spline-fitted to the shaft fitting hole 12 bored through the drum 1, so as to rotate the wire recovery drum 1 counterclockwise as viewed from above the wire recovery apparatus 7. Connected to the motor 17 is a speed controller 10 for speed control of the rotating mechanism 9. Although not illustrated, the speed controller 10 of this embodiment, including a rotary switch connected to a plurality of variable resistors for setting an angular velocity, is arranged to change the rotational position of the contact of the rotary switch by the use of an actuator which responds to plural timers, to vary the rotational speed of the motor 17.

The wire recovery apparatus 7 has casters 22, whereby it can be easily moved away from the position for use of the electric discharge machine 2 shown in Fig. 5, to facilitate discarding of the wire.

A wire recovery method according to a first embodiment of the invention, carried out with the above-described wire recovery apparatus 7, will now be described.

Before starting the electric discharge machine 2, an operator determines a desired reference coiling radius $r0$ of the wire (in this embodiment, a desired maximum coiling radius Rmax, shown in Figs. 4 to 6). If the used wire 6 received in the wire recovery drum 1 interferes with the inner peripheral surface of the drum, it is not coiled neatly, and accordingly, the maximum value Rmax (m) is set to such a value that no interference occurs between the drum 1 and the wire 6, taking account of the liability to coil up, diameter, rigidity, etc. of the wire 6, and is usually set to about 80% of the radius of the drum.

Next, a desired reference angular velocity $\omega0$ of the wire recovery drum 1 (in this embodiment, a desired minimum angular velocity $\omega min$ (rad/sec)) is calculated in accordance with equation $\omega min = v/Rmax$, such that the wire coiling speed at the maximum radius Rmax coincides with a command feed speed $\underline{v}$ of the wire. Then, taking the liability to coil, diameter, rigidity, etc. of the wire 6 into consideration, a desired wire coiling interval (pitch) $\Delta R$ (Fig. 5) is determined. Then, a desired minimum coiling radius Rmin (Figs. 5 and 6) is determined. Further, by subtracting the desired interval $\Delta R$ successively from the desired maximum radius Rmax, a set of desired wire coiling radii $Ri$ ($i = 1, 2, ...$) are determined which fall within the desired wire coiling radial range determined by the values Rmax and Rmin and each adjacent ones of which differ by the value $\Delta R$. Then, using equation $\omega i = v/Ri$ ($\omega max = v/Rmin$), a set of desired angular velocities $\omega i$ including a desired maximum angular velocity $\omega max$ are calculated, and the resistance values of the variable resistors of the speed controller 10 are set to respective suitable values so as to provide the velocities $\omega min$, $\omega i$, and $\omega max$. Also, time periods required for one rotation at the respective desired radii are set in the timers of the controller 10, respectively.

After the electric discharge machine 2 is started, electric discharge machining is carried out in a conventional manner, and the used wire 6 is conveyed toward the wire recovery drum 1. When starting the electric discharge machine 2, the operator causes the speed controller 10 to operate, the rotary switch of which has been set to the first rotational position beforehand. Accordingly, the first variable resistor of the speed controller 10 becomes effective upon start of the operation, and the motor 17 rotates the drum 1 at the minimum angular velocity $\omega min$ in accordance with the resistance value of the first variable resistor. The wire 6 is let fall into the drum 1 in alignment with the axis of rotation of the same (shaft 19), and when it contacts the inner bottom surface of the drum, a centrifugal force acts on the wire, whereby the wire is moved and located at the maximum radius Rmax corresponding to the value $\omega min$ (Fig. 4) in the radius direction of the drum. Meanwhile, the drum 1 placed on the rail 15 with the rollers 13 therebetween is smoothly rotated within the outer casing 8 and is vertically shaken as it passes the protuberances 14 of the rail 15.

When the drum 1 completes one rotation, the rotary switch of the speed controller 10 is set to the second rotational position by the actuator of the controller 10, which responds to time-out of the first timer. Accordingly, the speed control is this time carried out in accordance with the resistance value of the second variable resistor by the speed controller 10, whereby the drum 1 is rotated at the angular velocity $\omega1$. As a result, the wire 6 is laid at the radial distance R1 corresponding to the value $\omega1$ and smaller than the maximum radius Rmax by the predetermined interval $\Delta R$. Thereafter, each time the drum 1 makes one rotation, the rotational position of the rotary switch is changed, and therefore, the angular velocity of the drum is changed from $\omega i-1$ to $\omega i$ ($i = 2, 3, ...$), whereby the wire 6 is received in the drum 1 while forming an inwardly progressing spiral with adjacent turns thereof spaced at about the predetermined interval $\Delta R$. When the wire recovery at the minimum coiling radius Rmin corresponding to the the maximum angular velocity $\omega max$ is finished, the rotary switch is again switched to the first rotational position, and accordingly, the wire 6 is laid at the distance corresponding to the maximum radius Rmax, as shown in Fig. 6. Thereafter, the wire recovery operation described above is repeatedly carried out.

When recovery of the wire takes place, the wire 6 is not laid outward of the radial distance which is the sum of the maximum wire coiling radius Rmax and a value of variance corresponding to the liability to coil, etc. of the wire 6. Thus, disorderly coiling due to the interference between the wire and the inner peripheral surface of the drum is avoided and no waste space is produced. Further, the drum 1 is shaken vertically during rotation, and accordingly, disorder of wire coiling due to the mutual interference of the wire coils can be prevented. Thus, the used wire 6 can be neatly laid in the drum 1, without leaving waste space.

When the drum 1 is filled with the recovered wire, it is detached from the electric discharge machine 2 and extracted from the outer casing 8, and the recovered wire 6 is discarded.

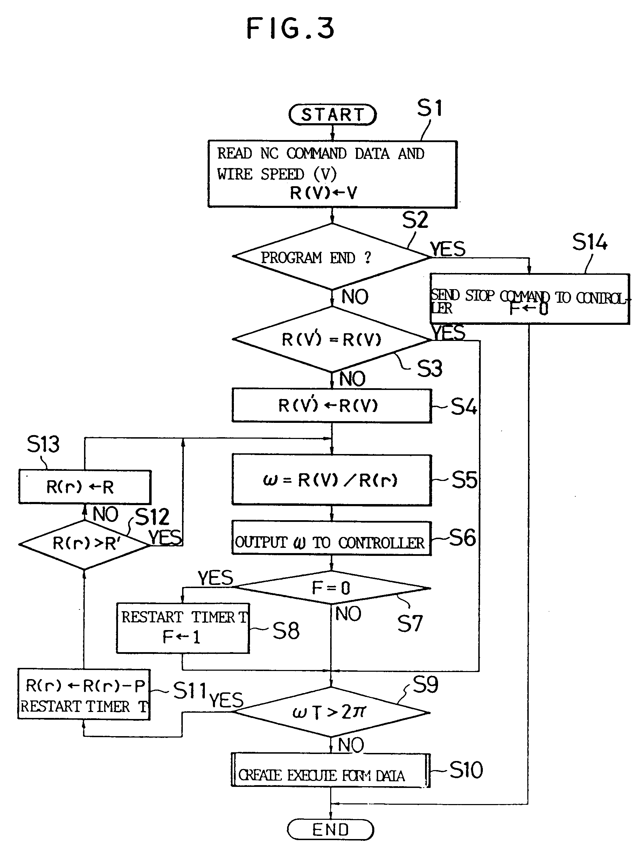

Next, a wire recovery method according to a second embodiment of the present invention will be described with reference to Fig. 3.

Although not shown, a speed controller 10 for carrying out the method of this embodiment is so arranged, for example, as to control the sliding position (resistance value) of a contact of a slide type variable resistor by the use of an actuator which responds to an angular velocity command supplied from a numerical control apparatus 30 (Fig. 1) of the electric discharge machine 2 as mentioned later. The numerical control apparatus 30 has an arrangement fundamentally similar to a conventional one. Namely, the numerical control apparatus 30 comprises, though not shown, a central processing unit (hereinafter referred to as CPU) including various registers and timers as described later, a memory, and a manual data input device, and is arranged to periodically execute a task process including a pulse distribution conventionally known and an execute form data preparation as a pre-processing for the pulse distribution, to control the operation of various operating parts of the electric discharge machine 2, e.g., a wire conveying mechanism. In the execute form data preparation, NC command data is converted into machine language data that is easy to be processed in the numerical control apparatus 30.

First, the operator operates the manual data input device to input the desired maximum wire coiling radius Rmax, the desired minimum coiling radius Rmin, the desired wire coiling interval $\Delta$R, the command wire feed speed $\underline{v}$, etc. to the numerical control apparatus 30. Upon input of the data, the CPU stores the input data in corresponding registers.

When the electric discharge machine is started, the CPU reads out the NC command data of the first one block from a machining program and the command wire feed speed (hereinafter referred to as wire speed) $\underline{v}$ from the memory, and stores the value $\underline{v}$ in a register R(v) (Step S1), and then determines whether the NC command data indicates the end of the program (Step of the determination in Step S2 is negative. The CPU then determines whether the wire speed has been changed, by the comparison between a previous wire speed v′ (initial value: "0") and a current wire speed $\underline{v}$ respectively stored in registers R(v′) and R(v) (Step S3). In this case, the previous wire speed v′ is "0" and the current wire speed $\underline{v}$ is not "0" and accordingly, it is determined that the wire speed has been changed, and the current wire speed stored in the register R(v) is stored in the register R(v′) as the previous wire speed (Step S4).

Next, the CPU calculates an angular velocity $\omega$ min of the drum (generally, angular velocity $\omega$i) that provides a wire coiling speed coinciding with the wire

feed speed $\underline{v}$ at the maximum radius Rmax (generally, the value R$\overline{i}$ stored in the register R(r)), in accordance with the current wire speed $\underline{v}$ stored in the register R(v) and the maximum radius R̄max initially set in the register R(r) (Step S5). Upon receiving an angular velocity command supplied from the CPU and representing the calculation result, the speed controller 10 sets the resistance value of the variable resistor incorporated therein to a value which provides an angular velocity corresponding to the wire speed $\underline{v}$ (Step S6).

Subsequently, the CPU determines whether the execute form data preparation is to be carried out for the first time after the start of machining operation, by referring to the value F of a flag register (Step S7). The initial value of the flag F is "0" which indicates that the process is to be carried out for the first time. In this case, the result of the determination in Step S7 is affirmative, and Step S8 is executed to set the flag F to "1" and restart a timer T for monitoring the time passed after the change of the wire speed (angular velocity of the drum).

The CPU then multiplies the minimum drum angular velocity $\omega$min, calculated in Step S5, by the time period T passed after the change of the angular velocity of the drum, to obtain an angle of rotation of the wire recovery drum 1 from an instant at which the angular velocity is changed, and determines whether the calculated value has reached $2\pi$ rad (Step S9). Since, in this case, the angular velocity of the drum has just been changed and thus the result of the determination in Step S9 is negative, Step S10 is executed to create execute form data in accordance with the NC command data read in Step S1. Based on this execute form data, a pulse distribution for the individual axes of the electric discharge machine is carried out, and the wire recovery apparatus 3 is operated. Accordingly, the electric discharge machine 2 starts an electric discharge machining operation, and the motor 17 rotates the wire recovery drum 1 at the minimum angular velocity $\omega$min in accordance with the resistance value, set at step S6, of the slide type variable resistor of the speed controller 10, whereby the used wire 6 is coiled at the maximum radius Rmax (Fig. 4).

Thereafter, the process beginning from Step S1 is periodically repeated. While the command feed speed of the wire remains unchanged, Steps S1, S2, S3, S9 and S10 are executed.

If it is determined after one rotation of the wire recovery drum 1 that the rotational angle $\omega$T of the drum has reached $2\pi$ rad, in Step S9, the CPU restarts the timer T and subtracts the wire interval $\Delta$ R from the wire coiling radius Ri (in this case, the maximum radius Rmax) stored in the register R(r), to obtain a wire coiling radius Ri+1 for the next rotation of the drum 1, which is set in the register R(r) (Step S11). The CPU then determines whether the set value Ri+1 is equal to or smaller than the minimum radius Rmin (Step S12). If the set value Ri+1 is larger than the value Rmin, Step S5 is executed to calculate an angular velocity ωi+1 which provides a wire coiling speed coinciding with the command feed speed at the wire coiling radius Ri+1, and the process beginning from Step S6 is executed in accordance with the calculated value.

As described above, each time one complete rotation of the wire recovery drum 1 is detected in Step S9, the desired wire coiling radius is decreased by the desired wire interval ΔR in Step S11, and the resistance value of the variable resistor in the speed controller 10 is changed to control the rotational speed of the motor 17 to a desired value such that the wire coiling speed at the new desired radius coincides with the command feed speed of the wire. Therefore, the used wire 6 is coiled spirally as shown in Fig. 5.

If it is thereafter determined in Step S12 that the wire coiling radius newly set in the register R(r) is smaller than the minimum value Rmin, the maximum radius Rmax is set in the register R(r), in Step S13, and the process beginning from Step S5 is executed. Accordingly, the above-described wire recovery operation is started again from the maximum radius Rmax, to form a second wire layer over the first wire layer formed in a radial range approximately between the maximum radius Rmax and the minimum radius Rmin, as shown in Fig. 6. Namely, in each of the wire layers, the wire is coiled from the coiling start radial position shown in Fig. 4 to the coiling end radial position shown in Fig. 5, and the wire layers are laid one upon another along the height of the wire recovery drum 1.

During wire recovery operation, if it is determined that the command feed speed of the wire has been changed, in Step S3, a desired angular velocity ωi of the drum is calculated in Step S5, in accordance with the changed wire speed stored in the register R(v) and the desired wire coiling radius Ri set in the register R(r). Consequently, even if the wire speed is changed, the actual angular velocity of the drum is controlled such that the wire is coiled at the same radial distance as before, whereby the wire 6 can be neatly coiled thereafter without causing disorder of wire coiling.

If it is determined in Step S2 that the NC command data read in Step S1 indicates the end of the machining program, the CPU sends a stop command to the speed controller 10 to stop the rotation of the motor 17, thereby ending the wire recovery operation, and sets the flag F to "0" (Step S14).

In the first and second embodiments described above, the angular velocity ωmin for the maximum wire coiling radius Rmax is used as the reference angular velocity; alternatively, the angular velocity ωmax for the minimum radius Rmin or an angular velocity ωi for a desired wire coiling radius Ri between the maximum and minimum radii may be used.

The first embodiment uses the speed controller 10 which selects one of a plurality of variable resistors by a rotary switch each time the wire recovery drum makes one rotation, whereas the second embodiment uses the speed controller 10 which changes the resistance value of the slide type variable resistor in accordance with the angular velocity command, but the present invention is not limited to these configurations alone. For example, the first embodiment may use a speed controller including a plurality of variable resistors, one of which is manually selected by the operator, or a speed controller including a slide type variable resistor, the position of a slider thereof being adjustable. The second embodiment may use a controller, which comprises a servo circuit and responds to a pulse train distributed by the numerical control apparatus, to control the rotational speed of a servomotor serving as the motor 17, thereby controlling the angular velocity of the drum.

**Claims**

1. A method of recovering a used wire in a wire recovery drum while rotating the wire recovery drum, comprising the steps of:

(a) determining a wire coiling radial range and a wire coiling interval;

(b) calculating a set of wire coiling radii which fall within said wire coiling radial range and wherein each radius differs from the adjacent one by said wire coiling interval;

(c) calculating a respective angular velocity of the wire recovery drum at a respective one of said wire coiling radii that provides a wire coiling speed coinciding with a command wire feed speed;

(d) updating the angular velocity of the wire recovery drum each time the wire recovery drum makes one rotation; and

(e) controlling an actual angular velocity of said wire recovery drum to said calculated angular velocity.

2. A method of recovering a used wire in a wire recovery drum while rotating the wire recovery drum, comprising the steps of:

(a) determining a maximum wire coiling radius, a minimum wire coiling radius, and a wire coiling interval;

(b) setting a reference wire coiling radius between said maximum wire coiling radius and said minimum wire coiling radius;

(c) calculating an angular velocity of the wire recovery drum for said reference wire coiling radius such that a wire coiling speed at said reference wire coiling radius coincides with a command wire feed speed;

(d) calculating a new wire coiling radius in accordance with said reference wire coiling radius and said desired wire coiling interval, each time the wire recovery drum makes one rotation;

(e) calculating an angular velocity of the wire recovery drum for said new wire coiling radius such that a wire coiling speed at said new wire coiling radius coincides with said command wire feed speed; and

(f) controlling an actual angular velocity of said wire recovery drum to a corresponding one of said angular velocities calculated in said steps (c) and (d).

3. The method according to claim 2, wherein, in said step (b), said reference wire coiling radius is set to one of said maximum wire coiling radius and said minimum wire coiling radius, and when the used wire is coiled over the entirety of a predetermined wire coiling radial range and thus a layer of the recovered wire is formed, said one of said maximum wire coiling radius and said minimum wire coiling radius is set as said new wire coiling radius.

4. The method according to claim 2 or 3, wherein said step (f) includes determining whether said wire recovery drum has completed one rotation from an instant at which the control of said step (f) is started, in accordance with said angular velocity of the wire recovery drum in said step (f) and a time period passed from the instant at which the control of said step (f) is started.

**Revendications**

1. Procédé de récupération d'un fil métallique usé dans un tambour de récupération de fil en faisant tourner ce tambour de récupération de fil, comprenant les étapes consistant à

(a) déterminer une plage radiale d'enroulement du fil métallique et un intervalle d'enroulement du fil,

(b) calculer un ensemble de rayons d'enroulement du fil métallique qui tombe dans ladite plage radiale d'enroulement de fil et dans lequel chaque rayon diffère de celui qui lui est adjacent dudit intervalle d'enroulement de fil,

(c) calculer une vitesse angulaire respective du tambour de récupération de fil pour chacun desdits rayons d'enroulement de fil respectifs qui détermine une vitesse d'enroulement de fil qui coïncide avec une vitesse d'alimentation de fil de commande,

(d) mettre à jour la vitesse angulaire du tambour de récupération de fil chaque fois que ce tambour de récupération de fil effectue un tour, et

(e) commander une vitesse angulaire actuelle du tambour de récupération de fil grâce à ladite vitesse angulaire calculée.

2. Procédé de récupération d'un fil usé dans un tambour de récupération de fil tout en faisant tourner le tambour de récupération de fil, comprenant les étapes consistant à:

(a) déterminer un rayon d'enroulement maximal du fil, un rayon d'enroulement minimal du fil, et un intervalle d'enroulement de fil;

(b) fixer un rayon d'enroulement de fil de référence entre ledit rayon d'enroulement maximal du fil et ledit rayon d'enroulement minimal du fil;

(c) calculer une vitesse angulaire du tambour de récupération de fil pour ledit rayon d'enroulement de fil de référence de manière qu'une vitesse d'enroulement de fil pour ledit rayon d'enroulement de fil de référence coïncide avec une vitesse d'alimentation de fil de commande,

(d) calculer un nouveau rayon d'enroulement du fil en accord avec ledit rayon d'enroulement de fil de référence et ledit intervalle d'enroulement de fil désiré, chaque fois que le tambour de récupération de fil effectue un tour,

(e) calculer une vitesse angulaire du tambour de récupération de fil pour ledit nouveau rayon d'enroulement de fil de manière qu'une vitesse d'enroulement de fil pour ledit nouveau rayon d'enroulement de fil coïncide avec ladite vitesse d'alimentation de fil de commande; et

(f) commander une vitesse angulaire actuelle dudit tambour de récupération de fil sur l'une desdites vitesses angulaires calculées auxdites étapes (c) et (d) qui correspond.

3. Procédé selon la revendication 2, dans lequel, dans ladite étape (b), ledit rayon d'enroulement de fil de référence est fixé soit audit rayon d'enroulement de fil maximal soit audit rayon d'enroulement de fil minimal, et quand le fil usé est enroulé sur la totalité d'une plage radiale d'enroulement de fil prédéterminée et qu'ainsi une couche de fil récupéré est formée, ledit rayon d'enroulement de fil maximal ou ledit rayon d'enroulement de fil minimal est fixé sur ledit nouveau rayon d'enroulement de fil.

4. Procédé selon la revendication 2 ou 3, dans lequel ladite étape (f) comprend la détermination pour savoir si ledit tambour de récupération de fil a terminé un tour à partir d'un instant auquel la commande de ladite étape (f) a commencé, en accord avec ladite vitesse angulaire du tambour de récupération de fil à ladite étape (f) et une période de temps écoulée à partir de l'instant auquel la commande de ladite étape (f) est démarrée.

**Patentansprüche**

1. Verfahren zum Wiederfinden eines benutzten Drahtes in einer Drahtwiederfindungstrommel während eines Rotierens der Drahtwiederfindungstrommel, mit den Schritten einer

a) Bestimmung eines radialen Drahtwicklungsbereichs und eines Drahtwicklungsintervalls,

b) Berechnung eines Satzes von in den radialen Drahtwicklungsbereich fallenden Drahtwicklungsradien, wobei jeder Radius um das Drahtwicklungsintervall vom benachbarten verschieden ist,

c) Berechnung einer Winkelgeschwindigkeit der Drahtwiederfindungstrommel bei einem der Drahtwicklungsradien, der eine mit einer Drahtvorschub-Befehlsgeschwindigkeit koinzidierende Drahtwicklungsgeschwindigkeit liefert,

d) Aktualisierung der Winkelgeschwindigkeit der Drahtwiederfindungstrommel bei jeder Umdrehung der Drahtwiederfindungstrommel, und

e) Steuerung einer tatsächlichen Winkelgeschwindigkeit der Drahtwiederfindungstrommel auf die berechnete Winkelgeschwindigkeit.

2. Verfahren zum Wiederfinden eines benutzten Drahtes in einer Drahtwiederfindungstrommel während einer Rotation der Drahtwiederfindungstrommel, mit den Schritten einer

a) Bestimmung eines maximalen Drahtwicklungsradius, eines minimalen Drahtwicklungsradius und eines Drahtwicklungsintervalls,

b) Einstellung eines Referenzdrahtwicklungsradius zwischen den maximalen Drahtwicklungsradius und den minimalen Drahtwicklungsradius,

c) Berechnung einer Winkelgeschwindigkeit der Drahtwiederfindungstrommel für den Referenzdrahtwicklungsradius derart, daß eine Drahtwicklungsgeschwindigkeit bei diesem Referenzdrahtwicklungsradius mit einer Befehlsdrahtvorschubgeschwindigkeit koinzidiert,

d) Berechnung eines neuen Drahtwicklungsradius in Übereinstimmung mit dem Referenzdrahtradius und dem gewünschten Drahtwicklungsintervall bei jeder Umdrehung der Drahtwiederfindungstrommel,

e) Berechnung einer Winkelgeschwindigkeit der Drahtwiederfindungstrommel für den neuen Drahtwicklungsradius derart, daß eine Drahtwicklungsgeschwindigkeit bei dem neuen Drahtwicklungsradius mit der Befehlsdrahtvorschubgeschwindigkeit koinzidiert, und

f) Steuerung einer tatsächlichen Winkelgeschwindigkeit der Drahtwiederfindungstrommel auf eine korrespondierende der in den Schritten c) und d) berechneten Winkelgeschwindigkeiten.

3. Verfahren nach Anspruch 2, wobei beim Schritt b) der Referenzdrahtwicklungsradius auf den maximalen Drahtwicklungsradius oder den minimalen Drahtwicklungsradius eingestellt wird, und, wenn der benutzte Draht über die Gesamtheit eines vorbestimmten Drahtwicklungsradiusbereiches gewickelt und folglich eine Schicht des wiedergefundenen Drahtes gebildet ist, der maximale Drahtwicklungsradius oder der minimale Drahtwicklungsradius auf den neuen Drahtwicklungsradius eingestellt wird.

4. Verfahren nach Anspruch 2 oder 3, wobei der Schritt f) eine Bestimmung, ob die Drahtwiederfindungstrommel von einem Augenblick an, bei welchem die Steuerung des Schrittes f) gestartet wird, in Übereinstimmung mit der Winkelgeschwindigkeit der Drahtwiederfindungstrommel beim Schritt f) und einer von dem Augenblick verstrichenen Zeitperiode an, bei welchem die Steuerung des Schrittes f) gestartet ist, eine Umdrehung vollendet hat.

# FIG.1

# FIG.2

# FIG.3

START — S1

READ NC COMMAND DATA AND WIRE SPEED (V)
$R(V) \leftarrow V$

S2
PROGRAM END ? — YES → S14
NO

SEND STOP COMMAND TO CONTROL-LER $F \leftarrow 0$

$R(V') = R(V)$ — YES
NO — S3

$R(V') \leftarrow R(V)$ — S4

S13
$R(r) \leftarrow R$

NO — S12
$R(r) > R'$ — YES

$\omega = R(V)/R(r)$ — S5

OUTPUT $\omega$ TO CONTROLLER — S6

YES
$F = 0$
NO — S7

RESTART TIMER T $F \leftarrow 1$ — S8

$R(r) \leftarrow R(r) - P$ RESTART TIMER T — S11 YES

$\omega T > 2\pi$ — S9
NO

CREATE EXECUTE FORM DATA — S10

END

9

# FIG.4

# FIG.5

# FIG.6

# FIG.7